# FASCICULE DE BREVET EUROPEEN

(11) **EP 2 332 838 B1**
(45) Date de publication et mention de la délivrance du brevet: **13.07.2016**
(21) Numéro de dépôt: 10194205.0
(22) Date de dépôt: 08.12.2010
(51) Int. Cl.: B64F 5/00, B64C 13/42, B64C 13/28, B64C 13/36, F16H 25/20

(54) **Dispositif de test de la détection de la reprise effort par une voie secondaire d'un actionneur de commande de vol, et procédé de test associé**
Testvorrichtung zur Erfassung der Wiederherstellung des Drucks über eine Nebenleitung eines Stellglieds zur Flugsteuerung, und entsprechendes Testverfahren
Device for testing load bearing detection of a secondary channel of a flight control actuator, and associated testing method

(30) Priorité: 08.12.2009 FR 0958738
(43) Date de publication de la demande: 15.06.2011
(73) Titulaire: Goodrich Actuation Systems SAS, 78530 Buc (FR)
(72) Inventeur: Moulon, Thomas, 95120 Ermont (FR); Turpin, Pierre, 78310 Maurepas (FR)
(74) Mandataire: Leckey, David Herbert

(56) Documents cités:
- EP-A1- 1 972 549
- EP-A2- 2 008 934
- WO-A1-02/096751
- FR-A1- 2 891 051
- GB-A- 749 253
- US-B1- 6 672 540

## Description

La présente invention est relative à un dispositif de test de la détection d'effort sur un actionneur de commande de vol. Elle concerne également un procédé de test.

Notamment, mais non limitativement, elle concerne le test de la détection de la reprise d'effort par une voie secondaire d'un actionneur de commande de vol d'aéronef et trouve notamment avantageusement application dans le cas d'actionneur de type THSA (Trimmable Horizontal Stabilizer Actuator).

On sait que classiquement, de tels actionneurs comportent deux voies mécaniques, l'une primaire, l'autre secondaire, cette dernière étant destinée à reprendre l'effort lorsque la voie primaire est défaillante.

En fonctionnement sur la voie primaire, les efforts transitent par une vis à billes ou à rouleaux creuse. Cette caractéristique permet d'y loger une tige de sécurité (barre dite « fail safe »), rainurée à ses extrémités et reliée avec jeu à la vis. Cette structure assure la continuité de la transmission des efforts et de la rotation de l'ensemble (en évitant une séparation axiale des éléments de la vis, en cas de rupture de la vis elle-même). La vis se termine à une de ses extrémités par une pièce d'attache par laquelle elle est reliée à l'aéronef (attache haute primaire). En cas de défaillance de celle-ci, les efforts sont repris par la tige de sécurité dont l'extrémité est une forme mâle (par exemple une sphère) disposée dans une forme femelle d'une pièce d'attache de la voie secondaire (attache haute secondaire). Cette attache haute secondaire est elle-même reliée à l'aéronef au moyen d'une pièce d'attache avion différente de celle utilisée pour supporter la voie primaire.

En fonctionnement normal, lorsque la voie primaire porte l'effort, il existe un jeu entre la forme mâle qui termine la tige de sécurité et la forme femelle de la pièce d'attache de la voie secondaire, de sorte que la pièce d'attache secondaire avion ne supporte pas d'autre effort que le poids de la pièce d'attache femelle secondaire du THSA.

Lors de la défaillance de la voie primaire, la forme mâle qui termine la vis vient en contact avec la forme femelle de la pièce d'attache de la voie secondaire ce qui entraine la reprise d'effort par la chape de fixation secondaire avion.

### Art antérieur

GB 749253 décrit un système de contrôle de l'inclinaison de surfaces de commande de vol. En particulier, GB 749253 décrit un manche de contrôle apte à contrôler l'inclinaison de surfaces de commande de vol d'un aéronef. Le mouvement du manche est transmis, par l'intermédiaire d'un bras de contrôle, à une bielle, elle-même connectée aux surfaces de contrôle par l'intermédiaire de câbles. Toutefois, le système décrit dans GB 749253 ne convient pas au test de moyens de détection de la mise sous charge de la voie secondaire d'un actionneur de commande de vol.

Il existe divers dispositifs de détection d'effort intégrés à l'actionneur de commande de vol permettant de détecter la reprise d'effort de la voie secondaire. Un exemple de solution en ce sens a par exemple été décrit par la demanderesse dans sa demande EP 1 972 549, qui est considéré comme l'art antérieur le plus proche et décrit les caractéristiques du préambule de la revendication 1.

Néanmoins, il n'existe pas à ce jour de solution simple permettant de tester au sol le fonctionnement de tels dispositifs de détection de la reprise d'effort par une voie secondaire d'un actionneur de commande de vol.

C'est pourquoi, on souhaite pouvoir proposer des solutions permettant de tester de tels dispositifs, notamment lors de la vérification périodique de l'avion au sol.

On souhaite également disposer de solutions de test pouvant être aisément mises en place sur un avion au sol.

### Présentation de l'invention

L'invention propose un dispositif selon la revendication 1 pour le test de moyens de détection de la mise sous charge de la voie secondaire d'un actionneur de commande de vol du type comportant une voie primaire et une voie secondaire apte à reprendre l'effort de la voie primaire en cas de défaillance de celle-ci, caractérisé en ce qu'il comprend un outil apte à prendre appui sur au moins une zone d'au moins un élément de la voie secondaire, ainsi qu'un bras de levier qui par basculement permet la mise en appui de l'outil sur ladite zone afin qu'il exerce un effort de traction et/ou compression sur la voie secondaire, ledit bras de levier étant monté pivotant sur un support apte à être fixé sur une structure mécaniquement indépendante de la voie secondaire.

L'invention comprend également un procédé de test selon la revendication 6.

Un avantage de l'invention est de proposer une solution simple permettant de tester au sol le fonctionnement d'un dispositif de détection de la reprise d'effort par une voie secondaire d'un actionneur de commande de vol, pour des raisons de maintenance de l'avion notamment.

Un autre avantage de l'invention est de proposer une solution qui s'adapte directement sur l'avion, afin de faciliter les opérations de vérification et de maintenance.

Un autre avantage encore de l'invention est de proposer une solution de test qui s'adapte directement sur l'avion de manière simple et peu invasive.

Un autre avantage encore de l'invention est de pouvoir proposer une solution de test qui entraîne le moins de dysfonctionnements possibles dans le cas où la procédure de test est conduite avec des erreurs et/ou des oublis, et ce afin de garantir une sécurité maximale.

### Présentation des figures

D'autres caractéristiques et avantages de l'invention ressortiront encore de la description qui suit, laquelle est purement illustrative et non limitative, et doit être lue en regard des dessins annexés sur lesquels :
- la figure 1 est une représentation schématique illustrant le principe d'un actionneur de commande de vol;
- les figures 2a à 2c sont des représentations schématiques en vue de côté et en coupe illustrant la fixation de l'attache haute de la voie secondaire;
- les figures 3a et 3b illustrent un exemple de réalisation de moyens de détection ;
- la figure 4 est une représentation en coupe d'une vis permettant la fixation de l'attache haute de la voie secondaire ;
- les figures 5 et 6 sont des représentations en perspective du dispositif de test de détection de la reprise d'effort par une voie secondaire d'un actionneur de commande de vol, mis en place sur un aéronef ;
- la figure 7 est une vue latérale du dispositif des figures 5 et 6 ;
- les figures 8 et 9 sont des représentations du dispositif des figures 5, 6 et 7 respectivement lors d'une reprise d'effort en compression et lors d'une reprise d'effort en traction.

### Description détaillée

### Structure générale de l'actionneur

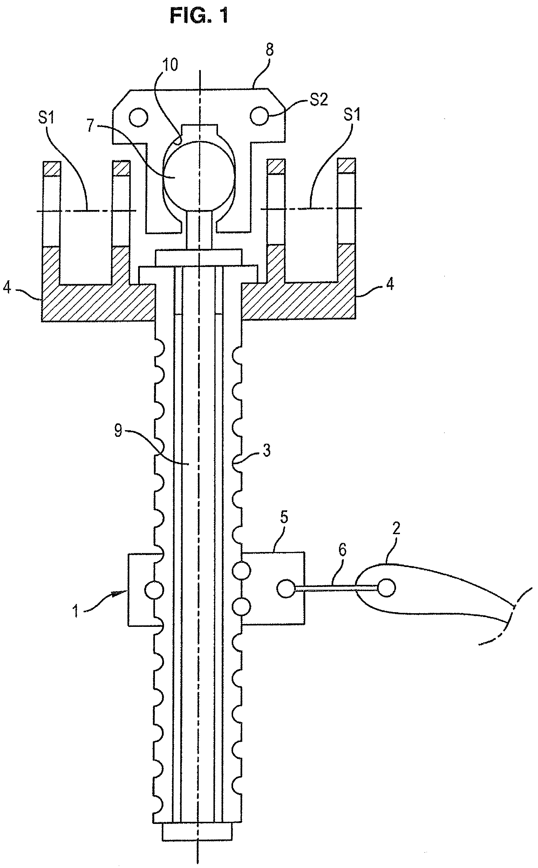

On a représenté schématiquement sur la figure 1 un actionneur 1 de commande de vol avec une voie primaire et une voie secondaire.
Cet actionneur 1 est par exemple un vérin de type THSA, pour la commande d'un plan 2 horizontal variable d'aéronef.

Il comporte une voie primaire qui comprend une vis creuse 3 reliée à une extrémité, par un système à cardan 4, à la structure S1 de l'avion. La voie primaire comprend également un écrou 5, qui coopère avec la vis 3 en étant monté sur celle-ci et qui est relié au plan 2 à commander, par exemple par un autre système 6 à cardan.

Une tige 9 de sécurité s'étend à l'intérieur de la vis 3 creuse. Cette tige 9 se termine par une tête 7 sphérique placée avec jeu à l'intérieur d'une forme sphérique femelle 10 d'une pièce 8 d'attache de la voie secondaire, cette pièce 8 d'attache étant elle-même fixée à une structure S2 de l'avion.

Cet actionneur est par exemple commandé par un moteur hydraulique ou électrique M, qui entraîne la vis 3 en rotation et déplace l'écrou 5 en translation, ce dernier étant à cet effet bloqué en rotation. Le déplacement en translation de l'écrou 5 permet ainsi de commander le basculement que l'on souhaite donner au plan horizontal variable 2.

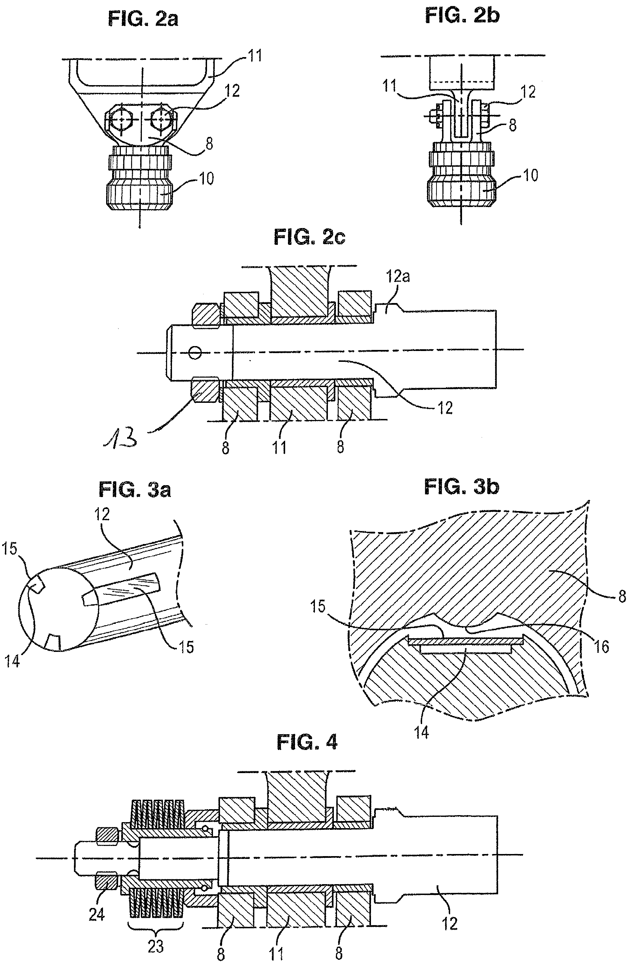

On a représenté sur les figures 2a, 2b et 2c la fixation de la pièce 8 d'attache de la voie secondaire sur une chape 11 supérieure de fixation de la structure S2 de l'avion.

Comme one peut le voir sur ces figures, la pièce 8 est un étrier qui comporte deux chapes entre lesquelles est reçue la chape 11. Deux vis 12 de fixation parallèles s'étendent à travers les chapes de la pièce 8 et la pièce 11, l'ensemble étant fixé par serrage entre des têtes 12a qui terminent les vis 12 de fixation à une extrémité et des écrous 13 dont le filetage coopère avec celui des vis 12 de fixation à leurs autres extrémités.
Dans ce mode de réalisation, la forme femelle 10 est réalisée par une pièce distincte de la pièce d'attache 8, cette pièce d'attache 8 étant rapportée sur la pièce qui constitue ladite forme femelle 10.

On désigne par attache haute de la voie secondaire l'ensemble constitué par les pièces 8, 10, 11 et 12.

### Détection de la mise sous charge

Des moyens 20 de détection d'effort sont disposés de telle façon à pouvoir détecter la mise sous charge de l'attache haute de la voie secondaire.

Des moyens de détections aptes à détecter un effort sont disposés sur au moins l'une des vis 12, ou sur au moins l'une des deux chapes de la pièce 8, ou encore sur des bagues interposées entre la vis 12 et les chapes et/ou l'écrou 13. De façon plus générale, ces moyens de détection peuvent être disposés sur toute pièce participant à l'attache haute de la voie secondaire.

Plusieurs solutions de moyens de détection de ce type ont notamment été proposées par la demanderesse, comme par exemple dans sa demande EP 08102826.8.

Ces solutions sont par exemple à jauge de contrainte et poinçons, ou encore à lames piézoélectriques destinées à exciter la vis 12 autour de sa ou ses fréquence(s) de résonnance, ou encore à bague à capteur de pression, par exemple du type à pont de silicium.

Les figures 3a et 3b illustrent un exemple à lames à jauge de contrainte dans lequel l'une des vis 12 présente au droit d'une des chapes de la pièce d'attache des rainures 14 en creux sur lesquelles s'étendent des lames souples 15 à jauge de contrainte. Les lames 15 à jauge de contrainte sont par exemple réparties à 120 degrés les unes des autres.

Des poinçons 16 en saillie sur la chape viennent en appui sur les lames à jauge de contrainte et les déforment lorsque les pièces de la voie secondaire sont en charge, soit en traction, soit en compression.

Ces moyens de détection d'effort 20 sont par exemple reliés au calculateur de l'aéronef, qui traite les mesures réalisées par lesdits moyens pour en déduire une mise sous charge de la voie secondaire et déclencher le cas échéant les alarmes correspondantes.

La figure 4 illustre encore un autre exemple dans lequel on interpose avantageusement entre l'écrou 13 associé à la vis 12 de fixation et la chape de la pièce 8 qu'il vient serrer un boitier 23 ressort. Ce boitier 23 ressort permet de répartir l'effort de serrage et rend indépendant la mise sous charge des jauges de l'effort couple de serrage appliqué à la vis lors du montage. On évite ainsi des fausses détections dues aux conditions de montage.

### Dispositif de test

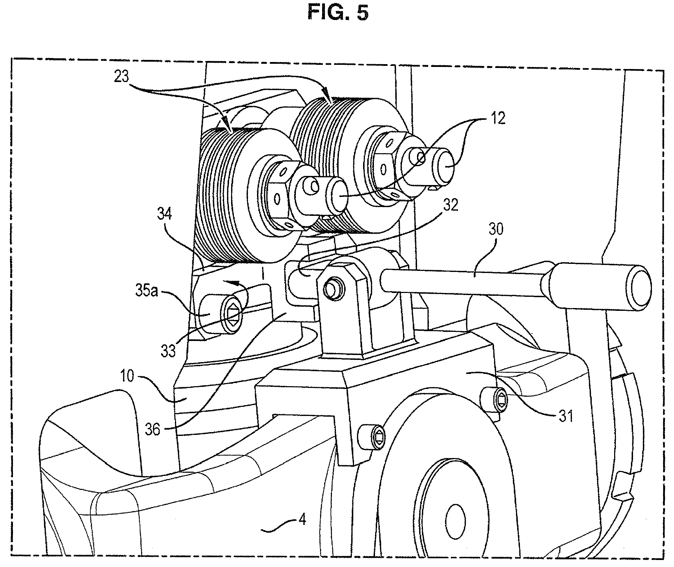

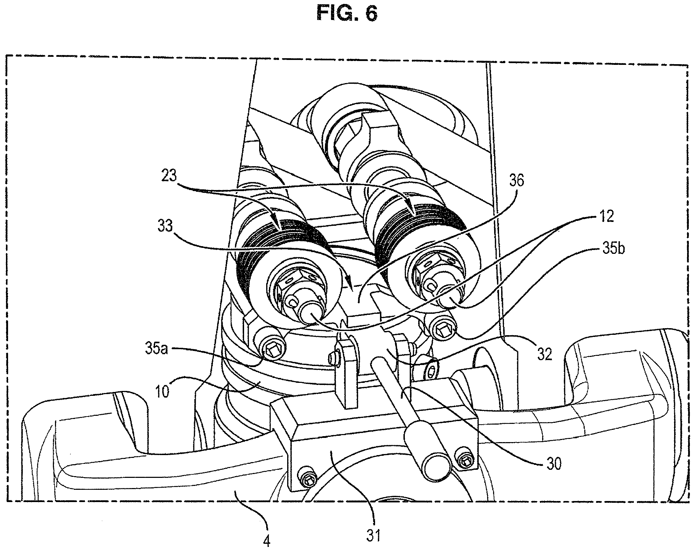

Le dispositif de test illustré sur les figures 5 à 7 comprend un bras de levier 30 monté pivotant sur un support 31. A son extrémité opposée à sa partie de préhension, la pièce formant bras de levier 30 se termine par une butée 32 destinée à coopérer avec une forme en U 36 complémentaire, appartenant à un outil 33, ladite butée 32 venant en appui sur les flancs intérieurs de la forme en U dans laquelle elle est reçue lorsque le bras de levier est basculé dans un sens ou dans l'autre.

Le support 31 peut être un étau rapporté, par exemple vissé, sur une structure découplée mécaniquement par rapport à la voie secondaire, en l'occurrence sur le système à cardan 4 de la voie primaire. D'autres modes de réalisation seraient bien entendu envisageables. Le support 31 pourrait notamment prendre appui sur une pièce de la voie primaire ou sur la structure de l'avion elle-même.

L'outil 33 enserre au moins un élément de l'attache haute de la voie secondaire d'une façon qui permet d'exercer sur ladite attache haute, par basculement du bras de levier 30 et transmission d'un effort par mise en appui de la butée 32 sur les flancs intérieurs de la forme en U 36, soit un effort de traction, soit un effort de compression, soit même, comme dans le cas qui est ici exemplifié, un effort de traction ou un effort de compression selon le sens de basculement du bras de levier 30.

Cet outil 33 d'enserrement est en l'occurrence réalisé par assemblage de deux plaques avant et arrière 34, au moyen de deux vis d'enserrement 35a et 35b, qui se positionnent dans un espace réduit entre une arête de chape de la pièce 8 et un rebord que présente, au droit de cette arête, la pièce qui constitue la forme femelle 10.

De cette façon, on dispose d'un outil 33 qui enserre la pièce 8 et est apte à venir en appui soit sur l'arête de la pièce 8 soit sur le rebord de la pièce 10, de sorte qu'un mouvement de basculement du bras de levier 30 génère, selon le sens de ce mouvement de basculement, une traction ou une compression sur la voie secondaire.

D'autres configurations pourraient être envisagées. Par exemple, l'outil 33 d'enserrement peut ne prendre appui que sur la partie haute de la pièce 8 et ne permettre que d'exercer un effort en compression.

L'outil 33 est apte à prendre appui sur au moins une zone d'au moins un élément de la voie secondaire.

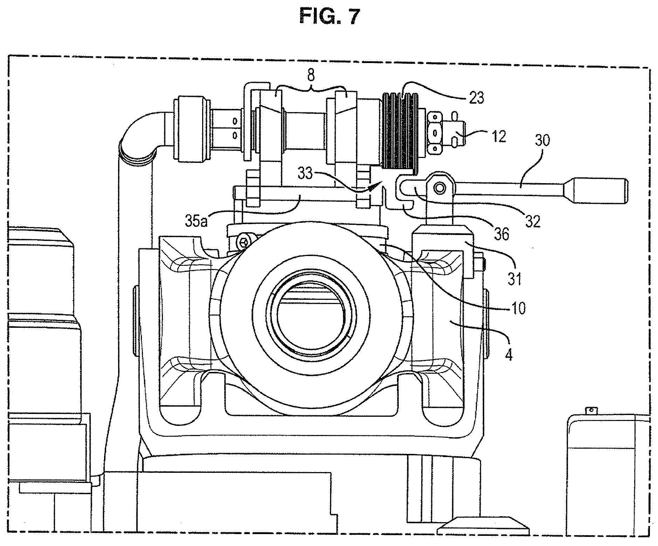

Avantageusement, l'outil 33, comprenant notamment les plaques avant et arrière 34 liées par les vis d'enserrement 35a,35b, est apte à faire pince autour d'une zone d'un élément de l'attache haute de la voie secondaire, comme illustré par exemple en figure 7.

### Exemples de tests de mise en charge

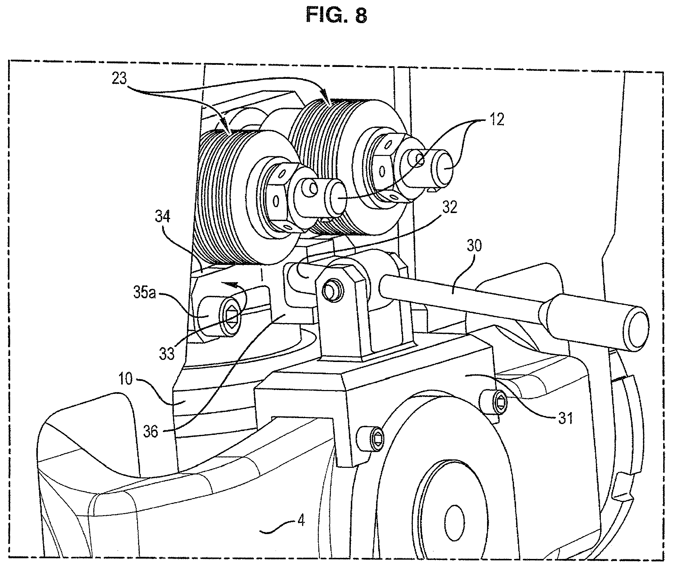

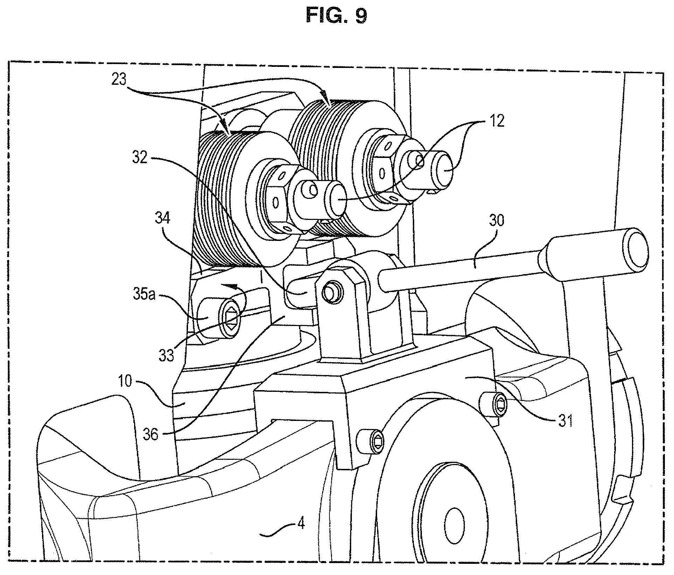

Les figures 8 et 9 illustrent une mise en effort de la voie secondaire par le dispositif de test.

Le cas échéant, dans les structures utilisant un boitier 23 ressort, on dessert préalablement celui-ci pour éviter des frictions mécaniques et permettre la remise à zéro des moyens de détection de la mise sous charge de la voie secondaire.

Dans le cas de la figure 8, la voie secondaire est sollicitée en compression.

Le pivotement vers le bas du bras de levier 30 autour de son axe de pivotement, bascule la butée 32 en appui contre le flanc intérieur haut de la forme en U 36. L'effort d'appui est transmis à la pièce 8 d'attache, appartenant à l'attache haute de la voie secondaire, par l'intermédiaire de l'outil 33 d'enserrement.

La figure 9 illustre un effort en sens contraire.

Lors d'une mise en charge au moyen du dispositif de test qui vient d'être décrit, on vérifie que les moyens 20 de détection de la mise sous charge de la voie secondaire ont bien détecté l'effort appliqué. Cette vérification peut être faite de plusieurs manières, en utilisant ou non des moyens électroniques spécifiquement dédiés.

Une première possibilité est de positionner un opérateur dans le cockpit de l'aéronef, dont le rôle est de vérifier qu'une alarme, qui se déclenche lorsque les moyens 20 de détection ont détecté une mise sous charge de la voie secondaire, s'est bien déclenchée.

Une autre possibilité encore est d'utiliser un détecteur, que l'on vient connecter à un calculateur de l'avion en communication avec les moyens 20 de détection.

Une fois les tests en traction et/ou compression terminés, le dispositif de test est démonté de l'aéronef en dévissant les vis d'enserrement 35a, 35b et en démontant l'étau de serrage 31.

A l'issue du test, les boitiers ressort 23 et les écrous 13 sont remis en place.

## Revendications

1. Dispositif pour le test de moyens de détection de la mise sous charge de la voie secondaire d'un actionneur de commande de vol du type comportant une voie primaire et une voie secondaire apte à reprendre l'effort de la voie primaire en cas de défaillance de celle-ci, **caractérisé en ce qu'**il comprend un outil (33) apte à prendre appui sur au moins une zone d'au moins un élément de la voie secondaire, ainsi qu'un bras de levier (30) qui, par basculement, est adapté pour permettre la mise en appui de l'outil sur ladite zone afin qu'il exerce un effort de traction et/ou compression sur la voie secondaire, ledit bras de levier (30) étant monté pivotant sur un support (31) apte à être fixé sur une structure mécaniquement indépendante de la voie secondaire.

2. Dispositif selon la revendication 1, **caractérisé en ce que** l'outil (33) est apte à enserrer au moins une zone d'au moins un élément de l'attache haute de la voie secondaire.

3. Dispositif selon la revendication 2, dans lequel l'outil (33) comprend un ensemble comprenant deux plaques (34) liées par deux vis (35a,35b) d'enserrement, apte à faire pince autour d'une zone d'un élément de l'attache haute de la voie secondaire.

4. Dispositif selon l'une des revendications 1 à 3, **caractérisé en ce que** l'outil (33) présente une forme en U (36) dans laquelle est reçue une butée (32) qui termine le bras formant levier (30) à son extrémité opposée à son extrémité de préhension, ladite butée (32) venant en appui contre l'un et/ou l'autre des deux flancs intérieurs de la forme en U (36) lors du basculement du bras de levier (30) dans un sens ou un autre, et permettant ainsi d'appliquer un effort dans un sens ou dans l'autre sur la voie secondaire.

5. Dispositif selon l'une des quelconques revendications précédentes, dans lequel le support (31) comprend un étau apte à être rapporté sur une pièce de la voie primaire ou de la structure d'un aéronef.

6. Procédé pour le test de moyens de détection de la mise sous charge de la voie secondaire d'un actionneur de commande de vol du type comportant une voie primaire et une voie secondaire apte à reprendre l'effort de la voie primaire en cas de défaillance de celle-ci, **caractérisé en ce qu'**on exerce un effort de traction et/ou compression sur la voie secondaire au moyen d'un outil (33) apte à prendre appui sur au moins une zone d'au moins un élément de la voie secondaire, ainsi qu'au moyen d'un bras de levier (30) qui par basculement permet la mise en appui de l'outil (33) afin qu'il exerce ledit effort de traction et/ou compression sur la voie secondaire, ledit bras de levier (30) étant monté pivotant sur un support (31) apte à être fixé sur une structure mécaniquement indépendante de la voie secondaire.

7. Procédé selon la revendication 6, dans lequel l'outil (33) étant apte à enserrer au moins une zone d'au moins un élément de l'attache haute de la voie secondaire, on fixe le support (31) du bras de levier (30) sur une structure mécaniquement indépendante de la voie secondaire et on fixe l'outil (33) d'enserrement autour d'une zone d'un élément de l'attache haute de la voie secondaire, pour faire pince autour de ladite zone.

8. Procédé selon l'une des revendications 6 ou 7, comprenant une étape préalable de desserrage d'un boitier (23) ressort et d'un écrou (13), afin d'éviter des frictions mécaniques pour permettre la remise à zéro des moyens (20) de détection de la mise sous charge de la voie secondaire, et une étape de resserrage du boitier ressort (23) et de l'écrou (13) en fin de test.

## Patentansprüche

1. Vorrichtung zum Testen von Mitteln zur Erfassung der Belastung der Nebenleitung eines Stellglieds zur Flugsteuerung jenes Typs, der eine Hauptleitung und eine Nebenleitung umfasst, die geeignet ist, den Druck der Hauptleitung im Falle eines Ausfalls derselben wiederherzustellen, **dadurch gekennzeichnet, dass** sie ein Werkzeug (33) umfasst, das geeignet ist, sich auf zumindest einen Bereich mindestens eines Elements der Nebenleitung zu stützen, sowie einen Hebelarm (30), der durch Kippen dazu angepasst ist, das Aufstützen des Werkzeugs auf diesen Bereich zu ermöglichen, sodass es eine Zugkraft und/oder Druckkraft auf die Nebenleitung ausübt, wobei der Hebelarm (30) schwenkbar an einer Stütze (31) angebracht ist, die geeignet ist, an einer mechanisch von der Nebenleitung unabhängigen Struktur befestigt zu werden.

2. Vorrichtung nach Anspruch 1, **dadurch gekennzeichnet, dass** das Werkzeug (33) geeignet ist, zumindest einen Bereich mindestens eines hoch angebrachten Elements der Nebenleitung einzuspannen.

3. Vorrichtung nach Anspruch 2, wobei das Werkzeug (33) eine Einheit umfasst, die zwei durch zwei Schrauben (35a, 35b) verbundene Platten (34) zum Einspannen umfasst, die geeignet sind, einen Bereich eines hoch angebrachten Elements der Nebenleitung in Eingriff zu nehmen.

4. Vorrichtung nach einem der Ansprüche 1 bis 3, **dadurch gekennzeichnet, dass** das Werkzeug (33) eine U-Form (36) aufweist, in der ein Anschlag (32) aufgenommen wird, der den armbildenden Hebel (30) an seinem Ende gegenüber dem Greifende beendet, wobei der Anschlag (32) beim Kippen des Hebelarms (30) in die eine oder andere Richtung gegen die eine und/oder die andere von zwei Innenflanken in U-Form (36) zur Anlage kommt und damit ermöglicht, in die eine oder andere Richtung einen Druck auf die Nebenleitung auszuüben.

5. Vorrichtung nach einem der vorhergehenden Ansprüche, wobei die Stütze (31) einen Schraubstock umfasst, der geeignet ist, auf einem Teil der Hauptleitung oder der Struktur eines Luftfahrzeugs angebracht zu werden.

6. Verfahren zum Testen von Mitteln zur Erfassung der Belastung der Nebenleitung eines Stellglieds zur Flugsteuerung jenes Typs, der eine Hauptleitung und eine Nebenleitung umfasst, die geeignet ist, den Druck der Hauptleitung im Falle eines Ausfalls derselben wiederherzustellen, **dadurch gekennzeichnet, dass** eine Zugkraft und/oder Druckkraft auf die Nebenleitung ausgeübt wird, und zwar mittels eines Werkzeugs (33), das geeignet ist, sich auf zumindest einen Bereich mindestens eines Elements der Nebenleitung zu stützen, sowie mittels eines Hebelarms (30), der durch Kippen das Aufstützen des Werkzeugs (33) ermöglicht, damit es besagte Zugkraft und/oder Druckkraft auf die Nebenleitung ausübt, wobei der Hebelarm (30) schwenkbar an einer Stütze (31) angebracht ist, die geeignet ist, an einer mechanisch von der Nebenleitung unabhängigen Struktur befestigt zu werden.

7. Verfahren nach Anspruch 6, wobei das Werkzeug (33) geeignet ist, zumindest einen Bereich mindestens eines hoch angebrachten Elements der Nebenleitung einzuspannen, die Stütze (31) des Hebelarms (30) auf einer mechanisch von der Nebenleitung unabhängigen Struktur befestigt wird und das Einspannwerkzeug (33) um einen Bereich eines hoch angebrachten Elements der Nebenleitung befestigt wird, um den Bereich in Eingriff zu nehmen.

8. Verfahren nach einem der Ansprüche 6 oder 7, einen vorherigen Schritt der Lockerung eines Federgehäuses (23) und einer Schraubenmutter (13) umfassend, um mechanische Reibungen zu verhindern, um die Rückstellung der Mittel (20) zur Erfassung der Belastung der Nebenleitung auf Null zu ermöglichen, sowie einen Schritt der Neuspannung des Federgehäuses (23) und der Schraubenmutter (13) am Ende des Tests.

## Claims

1. Device for testing of means for detection of the loading of the secondary channel of a flight control actuator of the type comprising a primary channel and a secondary channel capable of bearing the load of the primary channel in case of a failure thereof, **characterized in that** it includes a tool (33) capable of being supported on at least one area of at least one element of the secondary channel, as well as a lever arm (30) which, by tilting, is capable of enabling the tool to be supported on said area, so that it exerts a tensile and/or compressive force on the secondary channel, said lever arm (30) being mounted so that it pivots on a support (31) capable of being attached to a structure that is mechanically independent of the secondary channel.

2. Device according to Claim 1, **characterized in that** the tool (33) is capable of enclosing at least one area of at least one element of the upper attachment of the secondary channel.

3. Device according to Claim 2, in which the tool (33) includes an assembly including two plates (34) connected by two clamping screws (35a, 35b), capable of forming a clamp around an area of an upper attachment of the secondary channel.

4. Device according to any one of Claims 1 to 3, **characterized in that** the tool (33) has a U shape (36) in which an abutment (32) is received, which terminates the arm forming the lever (30) at its end opposite its gripping end, said abutment (32) resting against one and/or the other of the two internal flanks of the U shape (36) during the tilting of the lever arm (30) in one direction or another, and thus enabling the application of a force in one direction or the other on the secondary channel.

5. Device according to any one of the preceding claims, in which the support (31) includes a vise capable of being connected to a part of the primary channel or of the structure of an aircraft.

6. Method for testing of means for detection of the loading of the secondary channel of a flight control actuator of the type comprising a primary channel and a secondary channel capable of bearing the load of the primary channel in case of failure thereof, **characterized in that** a tensile and/or compressive force is exerted on the secondary channel by means of a tool (33) capable of being supported on at least one area of at least one element of the secondary channel, as well as by means of a lever arm (30) which, by tilting, enables the tool (33) to be supported, so that it exerts said tensile and/or compressive force on the secondary channel, said lever arm (30) being mounted so that it pivots on a support (31) capable of being attached to a structure that is mechanically independent of the secondary channel.

7. Method according to Claim 6, in which, said tool (33) being capable of enclosing at least one area of at least one element of the upper attachment of the secondary channel, the support (31) of the lever arm (30) is attached to a structure that is mechanically independent of the secondary channel, and the enclosing tool (33) is attached around an area of an element of the upper attachment of the secondary channel, so as to form a clamp around said area.

8. Method according to either Claim 6 or Claim 7, including a preliminary step of loosening a spring casing (23) and a nut (13), so as to avoid mechanical friction in order to enable the resetting to zero of the means (20) for detection of the loading of the secondary channel, and a step of retightening the spring casing (23) and the nut (13) at the end of the test.
